# EUROPÄISCHE PATENTSCHRIFT

(11) **EP 1 481 875 B1**
(45) Veröffentlichungstag und Bekanntmachung des Hinweises auf die Patenterteilung: **25.08.2010**
(21) Anmeldenummer: 04003970.3
(22) Anmeldetag: 21.02.2004
(51) Int. Cl.: B62D 6/00

(54) **Kraftfahrzeuglenkung mit geschwindigkeitsabhängiger Lenkübersetzung**
Automotive steering system with speed-dependent transmission ratio
Direction d'automobile avec démultiplication fonction de la vitesse

(30) Priorität: 27.05.2003 DE 10323975
(43) Veröffentlichungstag der Anmeldung: 01.12.2004
(73) Patentinhaber: AUDI AG, 85045 Ingolstadt (DE)
(72) Erfinder: Meier, Thomas-Willibald, Dipl.-Ing. (FH), 91161 Hilpoltstein (DE)
(74) Vertreter: Asch, Konrad

(56) Entgegenhaltungen:
- EP-A- 1 371 541
- DE-A1- 10 032 340
- US-A- 5 027 917
- PATENT ABSTRACTS OF JAPAN Bd. 010, Nr. 270 (M-517), 13. September 1986 (1986-09-13) & JP 61 092964 A (NISSAN MOTOR CO LTD), 10. Mai 1986 (1986-05-10)

## Beschreibung

Die Erfindung betrifft eine Kraftfahrzeuglenkung mit einer variablen Lenkübersetzung gemäß der im Oberbegriff des Anspruches 1 angegebenen Art.

Derartige Kraftfahrzeuglenkungen mit einer variablen Lenkübersetzung sind hinreichend bekannt, wobei unter dem Begriff Lenkübersetzung das Verhältnis zwischen Drehwinkel des Lenkrades und Schwenkwinkel des gelenkten Rades verstanden wird.

Zur Charakterisierung der Eigenschaft einer Kraftfahrzeuglenkung werden in der Regel die Begriffe direkte/indirekte Lenkung verwendet. Änderungen der Lenkübersetzung werden hierbei wie folgt qualifiziert: Eine Abnahme der Lenkübersetzung bedeutet, dass die Lenkung direkter wird, d.h., dass bei abnehmender Lenkübersetzung eine am Lenkrad getätigte Lenkradbewegung in größere Einschlagwinkel an den Rädern umgesetzt wird. Entsprechend spricht man bei Zunahme der Lenkübersetzung davon, dass die Lenkung indirekter wird, also, dass mit zunehmender Lenkübersetzung die Drehbewegung am Lenkrad in einen kleineren Einschlagwinkel der Räder umgesetzt wird.

Es ist Stand der Technik die Lenkübersetzung eines Kraftfahrzeugs lenkwinkelabhängig auszuführen. Lenkwinkelabhängig bedeutet hierbei, dass eine Drehung des Lenkrades im Bereich um die Neutralstellung bzw. Geradeausstellung der Räder um einen bestimmten Winkelbetrag in einen geringeren Einschlagwinkel der Räder umgesetzt wird, als wenn die Drehung des Lenkrades um den gleichen Winkelbetrag bei bereits aus der Neutralstellung ausgelenkten Rädern vorgenommen wird. Dieses Verhalten, also dass mit zunehmender Lenkradbewegung aus der Neutralstellung eine abnehmende Lenkübersetzung verbunden ist, wird auch als progressive Lenkung bezeichnet. Liegt eine gegenteilige Lenkcharakteristik vor, bei der eine zunehmende Lenkradbewegung aus der Neutralstellung mit einer zunehmenden Lenkübersetzung einhergeht, spricht man entsprechend von einer degressiven Lenkung.

Weiterhin ist es bekannt bei Vorwärtsfahrt des Kraftfahrzeugs die Lenkübersetzung geschwindigkeitsabhängig auszuführen.

Die aufgezeigte Variabilität der Lenkübersetzung einer Kraftfahrzeuglenkung, also die Abhängigkeit der Lenkübersetzung vom Lenkwinkel sowie bei Vorwärtsfahrt des Kraftfahrzeugs von der Fahrgeschwindigkeit, erlaubt eine Abstimmung der Lenkcharakteristik auf diverse Fahrsituationen: So weist die Kraftfahrzeuglenkung beim Ein- und Ausparken aufgrund der Lenkwinkelabhängigkeit eine progressive Lenkcharakteristik auf, um ein leichtes Parkieren zu gewährleisten. Zu Gunsten der Wendigkeit des Kraftfahrzeugs in niedrigen Geschwindigkeitsbereichen, wie beispielsweise im Stadt- und Landstraßenverkehr, erlaubt die Geschwindigkeitsabhängigkeit der Lenkübersetzung bei Vorwärtsfahrt eine direkte Auslegung der Lenkübersetzung, während in höheren Geschwindigkeitsbreichen, wie z.B. bei Autobahnfahrt, die Geschwindigkeitsabhängigkeit der Lenkübersetzung die Lenkung zunehmend indirekter werden lässt, um so einen stabileren Geradeauslauf zu gewährleisten und schnelle Fahrmanöver, wie Ausweichen von Hindernissen mit intuitiven Lenkradbewegungen sicher kontrollierbar zu machen.

Als nachteilig erweist sich hierbei, dass mit den geschilderten Möglichkeiten lediglich für die Vorwärtsfahrt des Kraftfahrzeugs eine Abstimmung der Lenkcharakteristik möglich ist.

Zwar ist durch die Lenkwinkelabhängigkeit auch für den Fall Rückwärtsfahrt ein einfaches Rangieren/Parkieren gewährleistet, jedoch ergeben sich für zunehmende Rückwärtsfahrgeschwindigkeiten aufgrund des empfindlichen Fahrverhalten eines Kraftfahrzeugs bei Rückwärtsfahrt, die einem hinterachsgelenkten Fahrzeug entspricht, erhebliche Stabilitätsprobleme. Durch die bei Rückwärtsfahrt vorliegenden - aber im Vergleich zur Vorwärtsfahrt immer noch niedrigen Fahrgeschwindigkeiten - und der hierdurch bedingten direkten Lenkübersetzung reagiert das Fahrzeug unmittelbar auf Lenkbewegungen des Fahrers, wodurch eine kontrollierte Rückwärtsfahrt erschwert wird. Als Folge davon ist eine Rückwärtsfahrt ab ca. 20 bis 30 km/h für "Normalfahrer" nur schwer beherrschbar.

Die Ausführung einer Kraftfahrzeuglenkung mit variabler Lenkübersetzung für den Fall Rückwärtsfahrt ist aus der JP 610 92 964 ist bekannt. Es wird hier vorgeschlagen, bei Rückwärtsfahrt die Lenkübersetzung direkter werden zu lassen, um so beispielsweise das Parkieren zu erleichtern. Die bereits geschilderten Nachteile einer direkten Lenkübersetzung bei Rückwärtsfahrt, nämlich erhöhte Unfallgefahr aufgrund der verminderten Spurtreue beim Geradeausfahren, treten entsprechend auch hier auf.

In der nachveröffentlichten EP 1 371 541 A1 ist ein Verfahren zur Bestimmung des Übersetzungsverhältnisses der Lenkung eines Kraftfahrzeugs offenbart. Das Verfahren ist sowohl bei Vorwärtsfahrt als auch bei Rückwärtsfahrt des Kraftfahrzeugs anwendbar. Das Übersetzungsverhältnis für Vorwärts- bzw. Rückwärtsfahrt wird dabei jeweils mittels einer dreidimensionalen Kartografie ermittelt.

Der Erfindung liegt die Aufgabe zugrunde, eine Kraftfahrzeuglenkung mit einer variablen Lenkübersetzung derart weiterzubilden, dass unter Vermeidung der genannten Nachteile auch bei Rückwärtsfahrt eine kontrollierte und sichere Handhabung des Kraftfahrzeugs gewährleistet ist.

Dieser Aufgabe wird durch die Merkmale des Anspruches 1 gelöst.

Die Unteransprüche bilden vorteilhafte Weiterbildungen der Erfindung.

Der Erfindung liegt die Erkenntnis zugrunde, dass beim Geradeausfahren mit zunehmender Fahrgeschwindigkeit durch eine indirekte Lenkung eine verbesserte Spurtreue und somit eine sichere und komfortable Handhabung des Kraftfahrzeugs gewährleistet werden kann.

Nach der Erfindung weist die Kraftfahrzeuglenkung eine variable Lenkübersetzung auf. Die Umsetzung der Variabilität der Lenkübersetzung erfolgt über in einer Lenksäule angeordnete Mittel. Neben der Abhängigkeit der Lenkübersetzung vom Lenkwinkel sowie der Abhängigkeit von der Fahrzeuggeschwindigkeit bei Vorwärtsfahrt des Kraftfahrzeugs entsprechend einer ersten vorgegebenen Kennlinie, ist die Variabilität der Lenkübersetzung der Kraftfahrzeuglenkung auch bei Rückwärtsfahrt des Kraftfahrzeugs geschwindigkeitsabhängig ausgeführt. Für die Umsetzung der Variabilität der Lenkübersetzung bei Rückwärtsfahrt ist eine zweite Kennlinie vorgegeben, die in drei Geschwindigkeitsintervalle mit einer entsprechend zugeordneten Lenkübersetzung für das jeweilige Intervall eingeteilt ist, nämlich in ein erstes Intervall mit einer über diesem Intervall konstanten, direkten Lenkübersetzung, in ein zweites Intervall mit einer über diesem Intervall stetig zunehmender Lenkübersetzung und in ein drittes Intervall mit einer über diesem Intervall konstanten, indirekten Lenkübersetzung. Auf einfache Art und Weise ist es nun möglich die Lenkcharakteristik auch bei Rückwärtsfahrt an die Fahrgeschwindigkeit anzupassen und so eine sichere Handhabung des Kraftfahrzeugs bei Rückwärtsfahrt zu gewährleisten.

Die Auswahl der jeweils benötigten Kennlinie erfolgt über eine sogenannte Gangerkennung, insbesondere aus CAN-Botschaft von Automatikgetriebe und/oder aus Raddrehzahl.

Vorzugsweise weist das erste Intervall eine Lenkübersetzung von 11:1 für den Geschwindigkeitsbereich von 0 bis 10 km/h auf, das zweite Intervall eine stetig zunehmende Lenkübersetzung von 11:1 auf 20:1 für den Geschwindigkeitsbereich von 10 bis 20 km/h und das dritte Intervall eine Lenkübersetzung von 20:1 für einen Geschwindigkeitsbereich ab 20 km/h. Die gewählte Einteilung erweist sich als vorteilhaft, da aufgrund der bei niedrigen Geschwindigkeiten vorliegenden direkten Übersetzung ein einfaches Parkieren und Rangieren gewährleistet ist, während mit zunehmender Rückwärtsfahrgeschwindigkeit aufgrund der sehr schnell indirekt werdenden Lenkübersetzung ein stabiles Rückwartsfahrverhalten sichergestellt ist.

Die Mittel zur Umsetzung der Variabilität der Lenkübersetzung umfassen im wesentlichen einen Elektromotor und ein Planetengetriebe in der Lenksäule.

Weitere Vorteile, Merkmale und Anwendungsmöglichkeiten der vorliegenden Erfindung ergeben sich aus der nachfolgenden Beschreibung in Verbindung mit dem in der Zeichnung dargestellten Ausführungsbeispiel.

Die Erfindung wird im folgenden anhand des in der Zeichnung dargestellten Ausführungsbeispiels näher beschrieben. In der Beschreibung, in den Ansprüchen und in der Zeichnung werden die in der hinten angeführten Liste der Bezugszeichen verwendeten Begriffe und zugeordnete Bezugszeichen verwendet.

In der Zeichnung bedeutet:
- Fig. 1: Ein Prinzipbild einer Kraftfahrzeuglenkung mit variabler Lenkübersetzung;
- Fig. 2: ein geschwindigkeitsabhängiger Kennlinienverlauf der Lenkübersetzung für den Fall Rückwärtsfahrt, und
- Fig. 3: die für eine Kraftfahrzeuglenkung mit einer variablen Lenkübersetzung zugrunde liegenden Kennlinien für Vorwärts- und Rückwärtsfahrt.

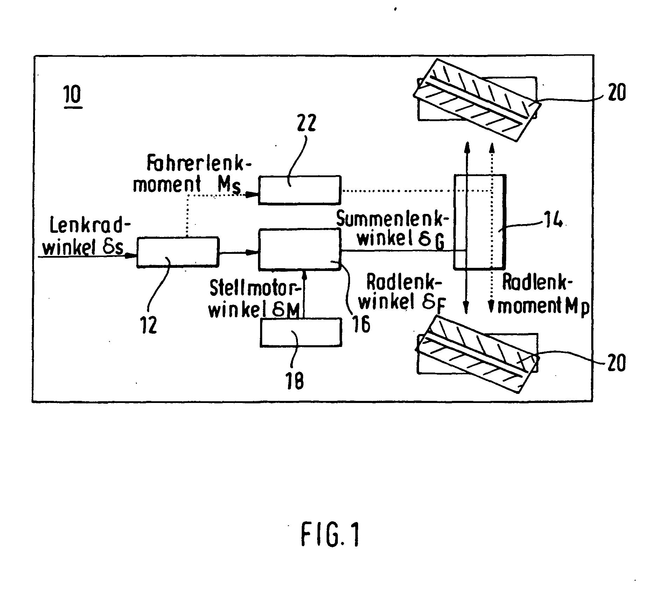

Die in Fig. 1 mehr oder minder schematisch dargestellte und insgesamt mit der Bezugsziffer 10 bezeichnete Kraftfahrzeuglenkung mit variabler Lenkübersetzung umfasst im Wesentlichen ein zwischen einem Drehstab 12 und einem Lenkgetriebe 14 angeordnetes Planetengetriebe 16 sowie einen Stellmotor 18.

Diese elektromechanische Kraftfahrzeuglenkung ermöglicht es einen über ein, hier nicht dargestelltes, Lenkrad eingestellten und entsprechend am Drehstab 12 vorliegenden Lenkwinkel δₛ über das Planetengetriebe 16 mit einem Stellmotorwinkel δ_{M} des Stellmotors 18 zu überlagern. Dem vom Fahrer vorgegebenen Lenkwinkel δₛ wird somit ein zusätzlicher Stellmotorwinkel δ_{M} hinzuaddiert. Der hieraus resultierende Summenlenkwinkel δ_{G} wird über das Lenkgetriebe 14 in einen entsprechenden Radlenkwinkel δ_{F} an den Rädern 20 umgesetzt.

Zudem weist die prinzipiell dargestellte Kraftfahrzeuglenkung 10 noch ein so genanntes Servotronic-Element 22 zur Steuerung des Fahrerlenkmoment Mₛ und des Radlenkmoment M_{F} auf.

Die Variabilität der Lenkübersetzung der Kraftfahrzeuglenkung 10 ist sowohl lenkwinkelabhängig als auch für Vorwärts- und Rückwärtsfahrt geschwindigkeitsabhängig ausgeführt.

Lenkwinkelabhängig bedeutet hierbei, dass beim Ein- und Ausparken der Lenkradeinschlag zunehmend progressiv übersetzt wird, wodurch ein erleichtertes Parkieren gewährleistet ist.

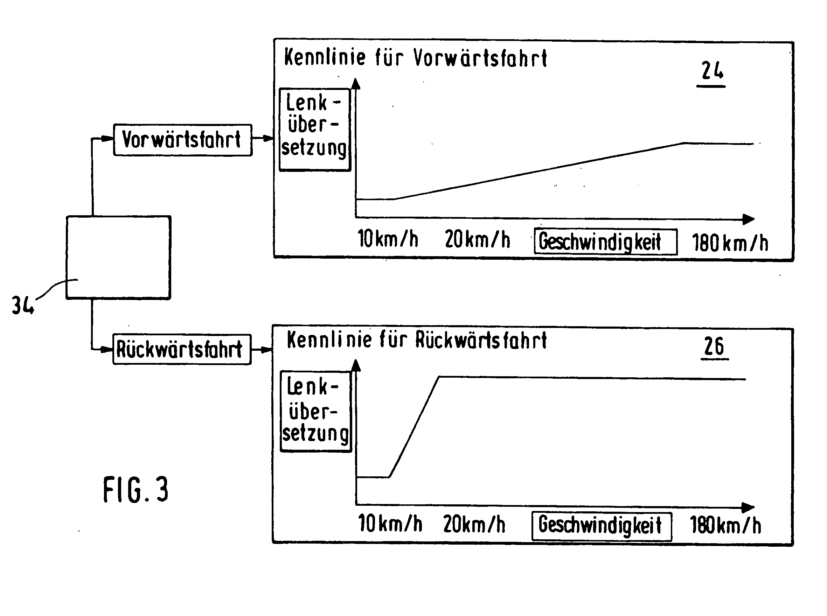

Die Geschwindigkeitsabhängigkeit der Lenkübersetzung ist jeweils über eine erste Kennlinie 24 für Vorwärtsfahrt und eine zweite Kennlinie 26 Rückwärtsfahrt realisiert (vgl. Fig. 3).

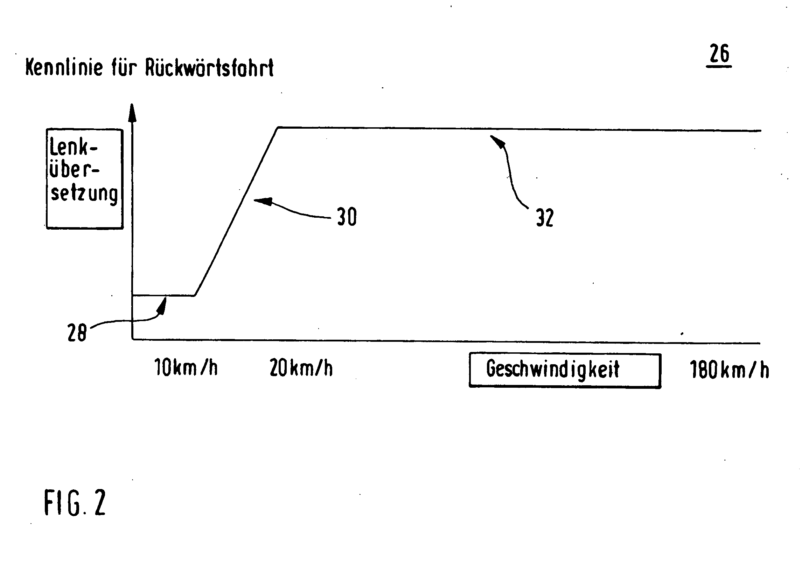

Ein möglicher Kennlinienverlauf 26 zur Sicherstellung einer geschwindigkeitsabhängigen variablen Lenkübersetzung bei Rückwärtsfahrt ist in Fig. 2 dargestellt.

Die Kennlinie 26 ist hierbei in drei Geschwindigkeitsintervalle 28, 30 und 32 eingeteilt, nämlich in ein erstes Intervall 28, dass einen Geschwindigkeitsbereich von 0 bis 10 km/h umfasst, in ein zweites Intervall 30 dessen Geschwindigkeitsbereich von 10 bis 20 km/h reicht, und in ein drittes Intervall 32, welches Geschwindigkeiten ab 20 km/h umfasst.

Das erste Intervall 28 weist eine konstante, direkte Lenkübersetzung von 11:1 auf, im zweiten Intervall 30 nimmt die Lenkübersetzung stetig von 11:1 bis 20:1 zu, während im dritten Intervall 32 eine konstante, indirekte Lenkübersetzung von 20:1 vorliegt.

Die im ersten Intervall 28 vorliegende direkte Lenkübersetzung ist dabei so gewählt, dass mit geringem Lenkradausschlag möglichst große Einschlagwinkel an den Rädern 20 realisierbar sind, so dass ein einfaches Rangieren und Parkieren bei geringen Rückwärtsfahrgeschwindigkeiten gewährleistet ist.

Durch den relativ schnellen Übergang zu einer indirekten Lenkcharakteristik im Bereich von Fahrgeschwindigkeiten zwischen 10 und 20 km/h reagiert das Fahrzeug unempfindlicher auf Lenkbewegungen. Das sehr empfindliche Fahrzeugverhalten eines Kraftfahrzeugs bei Rückwärtsfahrt wird hierdurch ausgeglichen.

Die im dritten Intervall 32 ab 20 km/h konstante Lenkübersetzung von 20:1 vermittelt dem Fahrer auch bei schnellerer Rückwärtsfahrt eine ähnliche Lenkcharakteristik des Fahrzeugs bezüglich Lenkradwinkel zu Fahrzeugreaktion wie bei der Vorwärtsfahrt, wodurch eine bessere Handhabung des Fahrzeugs und sichere Rückwärtsfahrt gewährleistet ist.

Wie aus Fig. 3 ersichtlich ist für den Fall Vorwärtsfahrt als auch für den Fall Rückwärtsfahrt jeweils eine separate Kennlinie, nämlich eine erste Kennlinie 24 für Vorwärtsfahrt und eine zweite Kennlinie 26 für Rückwärtsfahrt, vorgesehen. Mittels einer Gangerkennung 34 erfolgt die Auswahl der entsprechenden Kennlinie 24, 26, also, ob die Variabilität der Lenkübersetzung gemäß der Kennlinie 24 für Vorwärtsfahrt oder gemäß Kennlinie 26 für Rückwärtsfahrt abhängig gestaltet ist.

Die Erfindung zeichnet sich dadurch aus, dass mit Hilfe der geschwindigkeitsabhängigen Lenkübersetzung auch bei Rückwärtsfahrt eine sichere Handhabung des Kraftfahrzeugs gewährleisten ist.

### BEZUGSZEICHENLISTE

- 10: Kraftfahrzeuglenkung
- 12: Drehstab
- 14: Lenkgetriebe
- 16: Planetengetriebe
- 18: Stellmotor
- 20: Reifen
- 22: Servotronic-Element
- 24: Kennlinie Vorwärtsfahrt
- 26: Kennlinie Rückwärtsfahrt
- 28: erstes Geschwindigkeitsintervall
- 30: zweites Geschwindigkeitsintervall
- 32: drittes Geschwindigkeitsintervall
- 34: Gangerkennung

## Patentansprüche

1. Kraftfahrzeuglenkung (10) mit einer variablen Lenkübersetzung, bei der in einer Lenksäule Mittel (12, 14, 16, 18, 22) zur Umsetzung der Variabilität der Lenkübersetzung angeordnet sind und die Variabilität der Lenkübersetzung abhängig vom Lenkwinkel sowie bei Vorwärtsfahrt des Kraftfahrzeugs entsprechend einer vorgegebenen ersten Kennlinie (24) auch fahrzeuggeschwindigkeitsabhängig ist, wobei die Lenkübersetzung auch bei Rückwärtsfahrt fahrzeuggeschwindigkeitsabhängig ist und zur Umsetzung der Variabilität der Lenkübersetzung bei Rückwärtsfahrt eine zweite Kennlinie (26) vorgegeben ist, die in drei Geschwindigkeitsintervalle (28, 30, 32) mit einer entsprechend zugeordneten Lenkübersetzung für das jeweilige Intervall eingeteilt ist, wobei die zweite Kennlinie (26) in ein erstes Intervall (28) mit einer über diesem Intervall konstanten, direkten Lenkübersetzung, in ein zweites Intervall (30) mit einer über diesem Intervall stetig zunehmenden Lenkübersetzung und in ein drittes Intervall (32) mit einer über diesem Intervall konstanten, indirekten Lenkübersetzung, eingeteilt ist.

2. Kraftfahrzeuglenkung (10) mit einer variablen Lenkübersetzung nach Anspruch 1, **dadurch gekennzeichnet, dass** für die Auswahl der jeweils benötigten Kennlinie (24, 26) eine Gangerkennung (34), insbesondere aus CANbotschaft vom Automatikgetriebe und/oder aus Raddrehzahl, vorhanden ist.

3. Kraftfahrzeuglenkung (10) mit einer variablen Lenkübersetzung nach Anspruch 1 oder 2, **dadurch gekennzeichnet, dass** das erste Intervall (28) eine Lenkübersetzung von 11:1 für den Geschwindigkeitsbereich von 0 bis 10 km/h, das zweite Intervall (30) eine stetig zunehmende Lenkübersetzung von 11:1 auf 20:1 für den Geschwindigkeitsbereich von 10 bis 20 km/h und das dritte Intervall (32) eine Lenkübersetzung von 20:1 für einen Geschwindigkeitsbereich ab 20 km/h aufweist.

4. Kraftfahrzeuglenkung (10) mit einer variablen Lenkübersetzung nach einem der vorhergehenden Ansprüche, **dadurch gekennzeichnet, dass** die Mittel (12, 14, 16, 18, 22) zur Umsetzung der Variabilität der Lenkübersetzung im wesentlichen einen Stellmotor (18) und ein Planetengetriebe (16) in der Lenksäule umfassen.

## Claims

1. Motor vehicle steering system (10) having a variable steering gear ratio, in which motor vehicle steering system (10) are arranged means (12, 14, 16, 18, 22) for implementing the variability of the steering gear ratio, and the variability of the steering gear ratio is dependent on the steering angle and, during forward travel of the vehicle, is also vehicle-speed-dependent corresponding to a predefined first characteristic curve (24), with the steering gear ratio also being vehicle-speed-dependent during reverse travel and with a second characteristic curve (26) being predefined for implementing the variability of the steering gear ratio during reverse travel, which second characteristic curve (26) is divided into three speed intervals (28, 30, 32) with a correspondingly assigned steering gear ratio for the respective interval, with the second characteristic curve (26) being divided into a first interval (28) with a direct steering gear ratio which is constant over said interval, a second interval (30) with a steering gear ratio which increases continuously over said interval, and a third interval (32) with an indirect steering gear ratio which is constant over said interval.

2. Motor vehicle steering system (10) having a variable steering gear ratio according to Claim 1, **characterized in that**, for the selection of the respectively required characteristic curve (24, 26), a gear detection (34) is provided, in particular using CAN messages from the automatic gearbox and/or using the wheel rotational speed.

3. Motor vehicle steering system (10) having a variable steering gear ratio according to Claim 1 or 2, **characterized in that** the first interval (28) has a steering gear ratio of 11:1 for the speed range from 0 to 10 km/h, the second interval (30) has a continuously increasing steering gear ratio from 11:1 to 20:1 for the speed range from 10 to 20 km/h, and the third interval (32) has a steering gear ratio of 20:1 for a speed range above 20 km/h.

4. Motor vehicle steering system (10) having a variable steering gear ratio according to one of the preceding claims, **characterized in that** the means (12, 14, 16, 18, 22) for implementing the variability of the steering gear ratio substantially comprise an actuating motor (18) and a planetary gear set (16) in the steering column.

## Revendications

1. Direction de véhicule automobile (10) comprenant une démultiplication de direction variable, dans laquelle des moyens (12, 14, 16, 18, 22) sont disposés dans une colonne de direction pour convertir la variabilité de la démultiplication de direction, et la variabilité de la démultiplication de direction dépend de l'angle de direction et dépend aussi de la vitesse du véhicule en fonction d'une première caractéristique (24) prédéfinie en conduite en marche avant du véhicule automobile, la démultiplication de direction dépendant aussi de la vitesse du véhicule en conduite en marche arrière et une deuxième caractéristique (26) étant prédéfinie pour convertir la variabilité de la démultiplication de direction en conduite en marche arrière, laquelle est divisée en trois intervalles de vitesse (28, 30, 32) avec une démultiplication de direction associée correspondante pour l'intervalle respectif, la deuxième caractéristique (26) étant divisée en un premier intervalle (28) avec une démultiplication de direction directe et constante sur cet intervalle, en un deuxième intervalle (30) avec une démultiplication de direction augmentant constamment sur cet intervalle, et en un troisième intervalle (32) avec une démultiplication de direction indirecte constante sur cet intervalle.

2. Direction de véhicule automobile (10) avec une démultiplication de direction variable selon la revendication 1, **caractérisée en ce que** pour la sélection de la caractéristique requise respective (24, 26), on effectue une reconnaissance de rapport de vitesse (34), notamment à partir d'un message CAN de la transmission automatique et/ou à partir d'une vitesse de rotation des roues.

3. Direction de véhicule automobile (10) comprenant une démultiplication de direction variable selon la revendication 1 ou 2, **caractérisée en ce que** le premier intervalle (28) présente une démultiplication de direction de 11:1 pour la plage de vitesses de 0 à 10 km/h, le deuxième intervalle (30) présente une démultiplication de direction croissant constamment de 11:1 à 20:1 pour la plage de vitesses de 10 à 20 km/h et le troisième intervalle (32) présente une démultiplication de direction de 20:1 pour une plage de vitesses à partir de 20 km/h.

4. Direction de véhicule automobile (10) comprenant une démultiplication de direction variable selon l'une quelconque des revendications précédentes, **caractérisée en ce que** les moyens (12, 14, 16, 18, 22) pour convertir la variabilité de la démultiplication de direction comprennent essentiellement un moteur de commande (18) et un engrenage planétaire (16) dans la colonne de direction.
